# EUROPÄISCHE PATENTANMELDUNG

(11) **EP 4 226 820 A1**
(43) Veröffentlichungstag der Anmeldung: **16.08.2023**
(21) Anmeldenummer: 22156780.3
(22) Anmeldetag: 15.02.2022
(51) Int. Cl.: A47J 37/07, A47J 37/06

(54) **ESSTISCH ZUM ERHITZEN EINER ESSENSPORTION**

(71) Anmelder: Brachmann, Gabriele, 82008 Unterhaching (DE)
(72) Erfinder: Brachmann, Gabriele, 82008 Unterhaching (DE); Kathriner, Reso, 6074 Giswil (CH)
(74) Vertreter: Vossius & Partner Patentanwälte Rechtsanwälte mbB

(57) **Zusammenfassung**

Die vorliegende Anmeldung betrifft einen Esstisch zum Erhitzen einer Essensportion, insbesondere einen Raclette-Tisch. Der Esstischt weist ein Stützgestell, eine Tischplatte, die auf dem Stützgestell gelagert ist, und einen ausfahrbaren Abschnitt auf, wobei der ausfahrbare Abschnitt in einer Ausnehmung der Tischplatte aufgenommen ist und eine taschenförmige Öffnung mit einem oder mehreren Heizelementen zum Erhitzen einer Essensportion aufweist.

## Beschreibung

Die vorliegende Anmeldung betrifft einen Esstisch zum Erhitzen einer Essensportion, insbesondere einen Raclette-Tisch.

Aus dem Stand der Technik sind verschiedene Tische mit eingebauten Kocheinrichtungen bekannt.

Die Offenlegungsschrift DE 198 50 939 A1 offenbart einen Esstisch mit einer zentralen Kocheinrichtung. Ein Gasbrenner wird in einem mittleren Bereich vom Tisch angeordnet, um einen Kochtopf auf einer dafür vorgesehenen Kochfläche zu erhitzen.

Die CN 203776394 U betrifft einen Esstisch mit einer separaten höhenverstellbaren Heizplatte, die zum Warmhalten von den Behältern oberhalb der Platte genutzt wird.

Weiterhin wird in der WO 2018/065742 A1 ein integrierter Raclette-Tisch beschrieben.

Aus dem Stand der Technik, wie beispielsweise der EP 1 396 219 A1 und EP 1 607 031 A1, sind zudem diverse Raclette-Geräte bekannt.

Insbesondere für die Zubereitung von warmen Raclette-Gerichten gibt es bislang jedoch keine zufriedenstellende Lösung, die erfolgreich die Funktion eines Raclette-Geräts platzsparend, ergonomisch und betriebssicher in einen Esstisch integriert. Probleme ergeben sich hierbei insbesondere in der Gastronomie und Hotellerie, wo der Auf- und Abbau von Raclette-Geräten auf Tischen einen erheblichen Aufwand bedeutet. Besonders aufwendig ist hierbei die Versorgung größerer Gruppen, für die üblicherweise eine Vielzahl von Raclette-Geräten aufgestellt werden muss.

Es ist daher eine Aufgabe der vorliegenden Erfindung, einen Esstisch bereitzustellen, der insbesondere den Nachteilen des Stands der Technik Rechnung trägt und der leicht bedienbar und sicher ist.

Diese Aufgabe wird durch einen Esstisch gemäß Anspruch 1 gelöst. Die abhängigen Ansprüche richten sich auf bevorzugte Weiterbildungen.

Gemäß einem ersten Aspekt ist ein Esstisch mit einem Stützgestell, einer Tischplatte und einem ausfahrbaren Abschnitt bereitgestellt. Die Tischplatte ist auf dem Stützgestell gelagert und weist eine Ausnehmung auf. Der ausfahrbare Abschnitt ist in der Ausnehmung der Tischplatte aufgenommen und weist eine taschenförmige Öffnung mit einem oder mehreren Heizelementen zum Erhitzen einer Essensportion auf, vorzugsweise mehrerer Essensportionen. Der ausfahrbare Abschnitt ist in Höhenrichtung des Esstischs zwischen einer abgesenkten Stellung, in der die taschenförmige Öffnung in der Ausnehmung versenkt ist, und einer erhöhten Stellung, in der die taschenförmige Öffnung aus der Tischplatte ragt, verfahrbar.

Die Essensportion ist vorzugsweise eine Raclette-Portion und wird vorzugsweise in einer Raclette-Pfanne oder -Schaufel zubereitet. Vorzugsweise können mindestens 5, mindestens 8 oder mindestens 10 Raclette-Schaufeln gleichzeitig in der taschenförmigen Öffnung aufgenommen und erhitzt werden. Der ausfahrbare Abschnitt dient daher vorzugsweise dem Aufschmelzen von Käsescheiben und nicht etwa ganzen Käsehälften. Die Nutzung des Tischs ist jedoch nicht ausschließlich auf die Raclette-Zubereitung beschränkt. Dieser kann auch für andere Zwecke, wie etwa das Aufwärmen, Grillen, Kochen oder Backen einer Essensportion, verwendet werden.

Das Verfahren des ausfahrbaren Abschnitts in Höhenrichtung erlaubt, dass der Tisch in der abgesenkten Stellung für die alltägliche Nutzung als Esstisch und in der erhöhten Stellung für die Nutzung der taschenförmigen Öffnung mit Heizelementen zum Erhitzen der Essensportion eingesetzt wird. Dies erspart dem Nutzer den zeitaufwendigen Auf- und Abbau, insbesondere wenn die taschenförmige Öffnung bzw. die integrierte Kocheinrichtung häufig benutzt wird. Die Einbaulösung erlaubt zudem, dass kein zusätzlicher Stauraum für die Kocheinrichtung und die Verbindungskabel benötigt wird. Durch das maßgeschneiderte Design kann der Esstisch auch ästhetisch ansprechend und funktionell gestaltet werden.

Die taschenförmige Öffnung kann einen Boden zum Abstellen von mindestens einem Behälter mit der Essensportion, bevorzugt zum Abstellen von einer Mehrzahl von Behältern mit einer jeweiligen Essensportion, aufweisen. Dabei kann der Boden der taschenförmigen Öffnung in der erhöhten Stellung auf gleicher Höhe mit oder über der Tischplatte angeordnet sein, vorzugsweise mindestens 0,5 cm oder mindestens 1 cm über der Tischplatte. Der Boden liegt in der erhöhten Stellung vorzugsweise über der Tischplatte um zu verhindern, dass die Behälter versehentlich an der Tischplatte anliegen und die erhöhte Temperatur der Behälter in dem Kontaktbereich zur Tischplatte zu ungewollten Brandflecken führt.

Alternativ oder zusätzlich kann der ausfahrbare Abschnitt in der abgesenkten Stellung weniger als 5 cm über die Tischplatte hinausragen, vorzugsweise weniger als 2 cm und stärker bevorzugt nicht über die Tischplatte hinausragen. In der abgesenkten Stellung des ausfahrbaren Abschnitts ist der Höhenunterschied für den alltäglichen Gebrauch des Esstischs relativ gering auszugestalten.

Die Behälter können Pfännchen (insbesondere Raclette-Pfännchen oder Raclette-Schaufeln) oder auch kleine Töpfchen sein. Die Behälter sind vorzugsweise nach oben offen.

Ferner kann die taschenförmige Öffnung eine innere Seitenwand und/oder eine Decke aufweisen. Bevorzugt ist die taschenförmige Öffnung zur Seite und/oder in Richtung zur Tischplatte hin geöffnet. Durch die Decke verbleibt ein größerer Teil der Wärme zunächst innerhalb der taschenförmigen Öffnung. Durch die Decke kann zudem Wärmestrahlung von unter der Decke angeordneten Heizelementen auf die Essensportion(en) gerichtet werden. Die Decke kann auch das Risiko verringern, dass beim Kochen der Essensportion Fett oder Öl in Richtung der Nutzer spritzt.

Die innere Seitenwand kann eine tragende Struktur der taschenförmigen Öffnung bilden. Die innere Seitenwand kann den Boden mit der Decke verbinden.

Die taschenförmige Öffnung kann umlaufend um den ausfahrbaren Abschnitt ausgebildet sein. Hierdurch kann der Tisch flexibel durch unterschiedlich große Nutzergruppen verwendet werden. Zudem wird die Reinigung erleichtert. Zudem erleichtert dies den Nutzern, die Essensportion in die Öffnung zu stellen. Insbesondere kann eine Mehrzahl von Behältern von jeder Seite des Esstischs in die taschenförmige Öffnung eingelegt werden.

Der ausfahrbare Abschnitt kann ferner eine untere Seitenwand aufweisen, die sich von der taschenförmigen Öffnung (z.B. vom Boden) nach unten erstreckt. Hierdurch kann ein Spalt zwischen der Öffnung und der Tischplatte vermieden werden, in den z.B. ein Finger eingesteckt werden könnte. Dies erhöht die Sicherheit für Nutzer.

Die taschenförmige Öffnung kann über die untere Seitenwand auf dem Tischgestell abgestützt sein. Die untere Seitenwand kann eine tragende Struktur der taschenförmigen Öffnung bilden.

Die taschenförmige Öffnung und/oder der ausfahrbare Abschnitt kann aus Metall ausgebildet sein, bevorzugt aus Stahl, besonders bevorzugt aus Edelstahl.

Das Material der taschenförmigen Öffnung ist vorzugsweise wärmeleitend.

Die taschenförmige Öffnung, insbesondere der Boden, kann mit einem nicht-haftenden Material, wie z.B. mit Polytetrafluorethylen, beschichtet sein. Dies kann bei einem eventuellen Verkleckern von Essensportionen die Reinigung erleichtern.

Vorzugsweise sind das eine oder die mehreren Heizelemente Heizschleifen. Ein Heizelement kann zumindest abschnittsweise oder vollständig entlang der taschenförmigen Öffnung um den ausfahrbaren Abschnitt herum verlaufen.

Alternativ oder zusätzlich können mehrere Heizelemente entlang der taschenförmigen Öffnung um den ausfahrbaren Abschnitt herum angeordnet sein. Der Esstisch kann mindestens acht, bevorzugt mindestens zehn, besonders bevorzugt mindestens zwölf Heizelemente (z.B. Heizschleifen), aufweisen.

Die mehreren Heizelemente können jeweils voneinander beabstandet sein. Die Heizelemente können jeweils einem Sitzplatz zugeordnet sein.

Ferner kann der Esstisch mit einem Regler und/oder einem Steuergerät zur Einstellung der Heizleistung und/oder der Temperatur des einen oder der mehreren Heizelemente bereitgestellt werden. Die Heizleistung und/oder die Temperatur der mehreren Heizelemente kann einzeln oder in Untergruppen einstellbar sein, vorzugsweise durch einen jeweiligen Nutzer. Der Esstisch kann mehrere Regler aufweisen, die einem Nutzer jeweils die Einstellung der Temperatur und/oder der Heizleistung für ein einzelnes Heizelement oder für eine Untergruppe der Heizelemente gestatten.

Indem die Heizleistung und/oder die Temperatur von einem jeweiligen Nutzer am Platz geregelt wird, kann die Kochzubereitung individualisiert und kontrolliert verlaufen. Allerdings reicht es oftmals, wenn die Regelung zentral von einem Nutzer erfolgt. Wenn der Esstisch nicht von der vollen Anzahl der Nutzer genutzt wird, können die Heizelemente einzeln oder in Untergruppen angeschaltet werden.

Vorzugsweise sind die Heizelemente entlang eines geraden Abschnitts der taschenförmigen Öffnung in einem Mindestabstand voneinander von 20 cm, vorzugsweise 40 cm, angeordnet. Alternativ oder zusätzlich sind die Heizelemente entlang eines Kurvenabschnitts oder Eckenabschnitts der taschenförmigen Öffnung vorzugsweise enger als entlang des geraden Abschnitts angeordnet.

Das eine oder die mehreren Heizelemente können unterhalb und/oder entlang der Decke angeordnet sein.

Das eine oder die mehreren Heizelemente sind vorzugsweise vom Boden beabstandet, wobei der Abstand vorzugsweise mindestens 3 cm, stärker bevorzugt mindestens 5 cm beträgt. Das eine oder die mehreren Heizelemente können so ausgebildet sein, dass sie die Essensportion von oben erwärmen. Vorzugsweise sind das eine oder die mehreren Heizelemente so ausgebildet, dass der eine oder die mehreren auf dem Boden abgestellten Behälter unter den Heizelementen anordenbar sind. Diese Anordnung ist insbesondere für die Zubereitung von Raclette besonders günstig, weil der Käse von oben angeschmolzen wird.

Ferner kann der ausfahrbare Abschnitt eine Ablagefläche aufweisen. Vorzugsweise ist die Ablagefläche über dem Boden, benachbart zu einer oberen Fläche der Decke und/oder im Wesentlichen auf gleicher Höhe wie die obere Fläche der Decke angeordnet. Die Ablagefläche kann auf dem ausfahrbaren Abschnitt aufliegen und/oder abnehmbar sein. Der ausfahrbare Abschnitt weist vorzugsweise eine mittige Ausnehmung und/oder eine Auflagefläche zur Aufnahme der Ablagefläche auf.

Die Ablagefläche kann als ein gemeinsamer Nutzungsbereich in der Mitte des Esstischs verwendet werden, wo Gegenstände leicht zugänglich abgelegt und auf diese zugegriffen werden kann.

Die Ablagefläche ist vorzugsweise vom ausfahrbaren Abschnitt abnehmbar (insbesondere werkzeuglos). Hierdurch wird die Reinigung der Ablagefläche erleichtert.

Vorzugsweise liegt die Ablagefläche nur durch Schwerkraft auf dem ausfahrbaren Abschnitt auf.

Vorzugsweise ist die Ablagefläche aus einem Material mit einer geringeren Wärmeleitfähigkeit als die taschenförmige Öffnung ausgebildet und/oder aus Marmor und/oder aus Stein. Hierdurch wird vermieden, dass sich Gegenstände auf der Ablagefläche ungewollt erwärmen.

Die Ablagefläche kann einstückig oder aus mehreren Segmenten ausgebildet sein. Die taschenförmige Öffnung kann die Ablagefläche zumindest abschnittsweise oder vollständig umgeben. Die Aufteilung in mehrere Segmente hat den Vorteil, dass die Ablagefläche kostengünstiger herzustellen und leichter abnehmbar ist.

Der ausfahrbare Abschnitt kann eine Heizplatte aufweisen. Vorzugsweise ist die Heizplatte über dem Boden der taschenförmigen Öffnung angeordnet. Die Heizplatte kann die oben erwähnte Decke der taschenförmigen Öffnung bilden. So kann die Wärme der Heizelemente unterhalb der Decke bzw. Heizplatte gleichzeitig für das Aufwärmen der Heizplatte benutzt werden. Die Heizplatte kann eine zusätzliche Möglichkeit zur Kochzubereitung bieten, etwa für Fondue.

Die Heizplatte kann auf dem ausfahrbaren Abschnitt aufliegen und/oder abnehmbar (vorzugsweise werkzeuglos) sein. Für die Reinigung kann die Heizplatte vorzugsweise von dem ausfahrbaren Abschnitt abgenommen werden.

Vorzugsweise liegt die Heizplatte nur durch Schwerkraft auf dem ausfahrbaren Abschnitt auf. Hierdurch wird bei einem Herunterfahren des ausfahrbaren Abschnitts die Quetschgefahr reduziert. So wird die Heizplatte angehoben, wenn ein Gegenstand oder Finger sich in der taschenförmigen Öffnung befinden sollte.

Der ausfahrbare Abschnitt kann eine mittige Ausnehmung und/oder eine Auflagefläche für die Aufnahme der Heizplatte aufweisen. Vorzugsweise ist die innere Seitenwand der taschenförmigen Öffnung zur Aufnahme der Heizplatte ausgebildet, wobei die innere Seitenwand die Heizplatte vorzugsweise zumindest abschnittsweise oder vollständig umgibt.

Die Heizplatte kann aus einem Material mit einer höheren Wärmeleitfähigkeit als die Auflagefläche und/oder aus Stahl (z.B. Edelstahl) ausgebildet sein.

Die Heizplatte kann mit einem nicht-haftenden Material, wie z.B. mit Polytetrafluorethylen, beschichtet sein. Bei einem eventuellen Verkleckern von Essensportionen kann dies die Reinigung erleichtern.

Die Heizplatte kann einstückig oder aus mehreren Segmenten ausgebildet sein. Eine Ausbildung aus mehreren Segmenten erleichtert das Abheben zur Reinigung oder im Fall des Einquetschens eines Gegenstands.

Die Heizplatte kann eine Heizfläche zum Abstellen von mindestens einem Behälter mit einer Essensportion, bevorzugt zum Abstellen von einer Mehrzahl von Behältern mit einer jeweiligen Essensportion, ausbilden. Die Heizfläche ist vorzugsweise im Wesentlichen bündig mit oder unterhalb der Ablagefläche angeordnet. Die Heizfläche kann mindestens 0,3 cm, vorzugsweise mindestens 0,5 cm oder mindestens 1 cm unter der Ablagefläche angeordnet sein. Die Heizfläche kann von einem radial inneren erhöhten Rand und/oder einem radial äußeren erhöhten Rand umgeben sein, vorzugsweise wobei der innere und/oder der äußere erhöhte Rand durch die Heizplatte gebildet ist (insbesondere integral damit). Durch den Rand kann ausgelaufene Flüssigkeit gesammelt werden.

Der Esstisch kann ferner eine Abdeckung für die Heizplatte aufweisen, vorzugsweise wobei eine obere Fläche der Abdeckung im Wesentlichen mit der Ablagefläche bündig ist. Wenn die Heizplatte nicht verwendet wird und abgekühlt ist, kann sie durch die Abdeckung verdeckt werden. Die bündige Oberfläche erlaubt, dass keine Erhöhung zu der Tischplatte des Esstischs entsteht, wenn der ausfahrbare Abschnitt in der abgesenkten Stellung ist.

Die Abdeckung kann aus mehreren Segmenten ausgebildet sein.

Die Abdeckung kann eine mittige Öffnung aufweisen und/oder die Ablagefläche umgeben. Insbesondere kann die Abdeckung so gestaltet sein, dass die Ablagefläche auch dann zugänglich bleibt, wenn die Abdeckung auf der Heizplatte liegt.

Die Heizelemente können im Betrieb durch ein oder mehrere Kabel von einer Stromquelle, vorzugsweise mit einer Spannung in einem Bereich von 100 bis 240 Volt oder mindestens 400 Volt (z.B. Starkstrom), versorgt werden. Eine Starkstromversorgung kann dem benötigten Energieverbrauch Rechnung tragen, insbesondere wenn der Tisch für 8 oder mehr Personen ausgebildet ist.

Der Esstisch kann ein Steuergerät für die Steuerung der Heizelemente und/oder für die Steuerung von einem oder mehreren Bewegungselementen aufweisen.

Die Heizelemente können im Betrieb durch ein oder mehrere Kabel von einem Regler und/oder dem Steuergerät gesteuert werden. Das Steuergerät kann so ausgebildet sein, dass das eine oder die mehreren Heizelemente in der abgesenkten Stellung nicht eingeschaltet werden können und/oder dass das eine oder die mehreren Heizelemente nur in der erhöhten Stellung eingeschaltet werden können. Hierdurch kann gewährleistet werden, dass die Heizelemente nur unter sicheren Umständen, z.B. in der erhöhten Stellung, eingeschaltet werden.

Die Kabel für die Stromversorgung werden bevorzugt verdeckt. Insbesondere können die Kabel in einem oder mehreren Kanälen unter der Tischplatte verlaufen. Der eine oder die mehreren Kanäle sind vorzugsweise zumindest abschnittsweise in die Tischplatte gefräst. Die Kanäle können von unten mit einer Leiste abgedeckt werden.

Das Steuergerät kann so ausgebildet sein, dass es ein Verfahren des ausfahrbaren Abschnitts von der erhöhten Stellung in die abgesenkte Stellung verhindert, wenn das eine oder die mehreren Heizelemente eingeschaltet sind. Alternativ oder zusätzlich kann das Steuergerät so ausgebildet sein, dass es ein Verfahren des ausfahrbaren Abschnitts von der erhöhten Stellung in die abgesenkte Stellung verhindert, bevor das eine oder die mehreren Heizelemente für eine vorbestimmte Mindestabkühlzeit ausgeschaltet sind, wobei die Mindestabkühlzeit vorzugsweise von einer Dauer eines vorangegangenen Betriebs des/der Heizelements/e abhängt. Vorzugsweise verhindert das Steuergerät das Verfahren von der erhöhten Stellung in die abgesenkte Stellung nicht, wenn die Heizelemente vor dem Ausschalten nur kurzzeitig eingeschaltet waren, bevorzugt weniger als 30 Sekunden. Hierdurch können Schäden am Tisch verhindert werden.

Alternativ oder zusätzlich kann der Esstisch einen oder mehrere Temperatursensoren aufweisen, wobei das Steuergerät so ausgebildet ist, dass es ein Verfahren des ausfahrbaren Abschnitts von der erhöhten Stellung in die abgesenkte Stellung verhindert, bevor der eine oder die mehrere Temperatursensoren bestimmen, dass die Temperatur der Heizplatte, der taschenförmigen Öffnung und/oder des einen oder der mehreren Heizelemente unter einer vorbestimmten Maximaltemperatur liegt/liegen. Auch hierdurch können Schäden am Tisch verhindert werden. Die Verwendung der Temperatursensoren kann die Regelung der Temperaturen per Zeit ersetzen und/oder ergänzen.

Das eine oder die mehreren Heizelemente können in der erhöhten Stellung nach einem Einschalten und einer vorbestimmten Essenszeit, bevorzugt von mehr als 4 Stunden, automatisch durch ein Steuergerät ausgeschaltet werden. Hierdurch kann die Unfallgefahr bei einem versehentlichen Anlassen des Tischs reduziert werden.

Die vorstehenden Sicherheitsmaßnahmen sind insbesondere von Vorteil, wenn Nutzern die selbstständige Nutzung des Tischs gestattet wird oder der Tisch für Nutzer unbeaufsichtigt zugänglich ist (z.B. wenn dieser in einer zu mietenden Unterkunft, etwa einem Chalet, aufgestellt wird).

Die Heizelemente entlang eines Kurvenabschnitts oder eines Eckenabschnitts der taschenförmigen Öffnung können intermittierend ein- und ausgeschaltet werden, vorzugsweise wobei diese Heizelemente wiederholt automatisch nach Überschreiten einer vorbestimmten Einschaltzeit für eine vorbestimmte Pausenzeit ausgeschaltet und dann wieder eingeschaltet werden. Die Einschaltzeit kann mindestens 1 Minute, vorzugsweise mindestens 2 Minuten betragen. Die Pausenzeit kann mindestens 10 Sekunden, vorzugsweise mindestens 20 Sekunden betragen.

Damit die Kochzubereitung für alle Nutzer von dem Esstisch ähnlich verläuft, ist eine gleichmäßige Temperaturverteilung durch die Heizelemente angestrebt. Da in einem Kurven- oder Eckenabschnitt die Heizelemente näher benachbart sind als in einem geraden Abschnitt, können die Essensportionen dort schneller zubereitet werden. Durch das intermittierende Einund Ausschalten der Heizelemente in einem Kurvenabschnitt oder Eckenabschnitt wird die Zubereitungszeit verlängert, sodass die Nutzer im gleichen Tempo die Mahlzeit genießen können.

Das Steuergerät kann in einem Brandschutzgehäuse angeordnet sein, wobei das Gehäuse vorzugsweise aus Gipsfaser ausgebildet ist. Das Steuergerät kann unterhalb der Ablagefläche im ausfahrbaren Abschnitt angeordnet sein, vorzugsweise auf einem oder mehreren Querbalken des ausfahrbaren Abschnitts. Der ausfahrbare Abschnitt kann von unten durch eine Abdeckung, bevorzugt aus Aluminium, abgedeckt sein. Dies bietet eine erhöhte Sicherheit, z.B. im Falle unbeabsichtigter Kurzschlüsse. Die Abdeckung unterhalb des ausfahrbaren Abschnitts kann einen Zugriff von unten verhindern, z.B. von Kindern.

Das Stützgestell kann mindestens zwei ausfahrbare Säulen aufweisen, wobei das obere Ende der Säulen für die Aufnahme des ausfahrbaren Abschnitts ausgebildet ist. Die ausfahrbaren Säulen können einen feststehenden Abschnitt und einen beweglichen Abschnitt aufweisen, wobei das obere Ende vorzugsweise durch den beweglichen Abschnitt gebildet ist.

Das Stützgestell kann weiterhin mindestens zwei Stützsäulen aufweisen, wobei das obere Ende der Stützsäulen für die Aufnahme der Tischplatte ausgebildet ist. Die Stützsäulen können mit den ausfahrbaren Säulen verbunden sein, z.B. mit deren feststehenden Abschnitt. Die ausfahrbaren Säulen können jeweils ein Bewegungselement aufweisen, vorzugsweise einen elektrischen oder hydraulischen Hubzylinder. Die ausfahrbaren Säulen können jeweils einen Abschnitt für die Aufnahme des Bewegungselements aufweisen.

Die ausfahrbaren Säulen können einen Endanschlag für den ausfahrbaren Abschnitts in der abgesenkten Stellung bereitstellen, bevorzugt für den Querbalken des ausfahrbaren Abschnitts. Der Endanschlag kann durch einen Endanschlagsabschnitt zur Aufnahme des ausfahrbaren Abschnitts und/oder des Querbalkens in dem feststehenden Abschnitt ausgebildet sein. Der Endanschlagsabschnitt bestimmt vorzugsweise die Endposition des ausfahrbaren Abschnitts in der abgesenkten Stellung.

Die Tischplatte kann einen Endanschlagsabschnitt für die Aufnahme des ausfahrbaren Abschnitts in der erhöhten Stellung aufweisen, bevorzugt eines Querbalkens des ausfahrbaren Abschnitts. Der ausfahrbare Abschnitt kann in der erhöhten Stellung von unten an den Endanschlagsabschnitt der Tischplatte anschlagen. Der Endanschlagsabschnitt kann die Endposition des ausfahrbaren Abschnitts bestimmen.

Bevorzugt weisen die ausfahrbaren Säulen und/oder die Stützsäulen eine oder mehrere Aussparungen für die Kabel auf. Diese Aussparungen können Kabelführungen bilden.

Die Tischplatte kann eine der folgenden Formen aufweisen: oval, kreisförmig, rechteckig, hexagonal, oktogonal. Der ausfahrbare Abschnitt, die taschenförmige Öffnung, die Ablagefläche und die Heizplatte können eine der folgenden Formen aufweisen: oval, kreisförmig, rechteckig, hexagonal, oktogonal.

Die Form der Tischplatte kann nach dem Sitzplan der Nutzer ausgelegt werden. Es wird eine gleichmäßige Personenverteilung angestrebt, wobei die Nutzer auch gegenübersitzen können. Insbesondere die Zugänglichkeit zu dem gemeinsamen Nutzungsbereich, nämlich der Ablagefläche, ist vorzugsweise möglichst leicht. Der ausfahrbare Abschnitt, die taschenförmige Öffnung, die Ablagefläche und die Heizplatte kann aus dem gleichen Grund nach der gewünschten Nutzung geformt werden.

Vorzugsweise weist die Tischplatte eine oder mehrere Aussparungen für die Kabelführung auf, besonders bevorzugt an der unteren Seite der Tischplatte.

Der Esstisch und/oder ein Ensemble mit diesem Esstisch kann ferner einen Dunstabzug und/oder eine Sitzbank aufweisen.

Nachfolgend werden weitere bevorzugte Merkmale im Kontext besonders bevorzugter Ausführungsformen unter Verweis auf die Figuren näher beschrieben. Die Zeichnungen sind lediglich beispielhaft und sollen den Schutzbereich der Erfindung nicht einschränken. Es zeigen:
- Figur 1: eine perspektivische Ansicht einer bevorzugten Ausführungsform eines erfindungsgemäßen Esstischs in der abgesenkten Stellung;
- Figur 2: eine perspektivische Ansicht des Esstischs gemäß Figur 1 mit dem ausfahrbaren Abschnitt in der erhöhten Stellung;
- Figur 3: eine perspektivische Ansicht des Esstischs gemäß Figur 2 bei Entfernung einer Decke einer taschenförmigen Öffnung und einer Ablagefläche des Esstischs;
- Figur 4: eine Querschnittsansicht des Esstischs gemäß Figur 2;
- Figur 5: eine perspektivische Ansicht des Esstischs gemäß Figur 2 von unten;
- Figur 6: eine Explosionsdarstellung des Esstischs gemäß Figur 1.

Im Folgenden wird eine Ausführungsform zur Durchführung der Erfindung näher beschrieben, gegebenenfalls anhand der beigefügten Zeichnungen. Gleichwohl ist die Erfindung nicht auf diese nachfolgend beschriebene Ausführungsform beschränkt. An der Erfindung können verschiedene Abwandlungen vorgenommen werden, ohne vom Grundgedanken der Erfindung abzuweichen. Der Schutzbereich wird allein durch die Ansprüche und deren Äquivalente definiert.

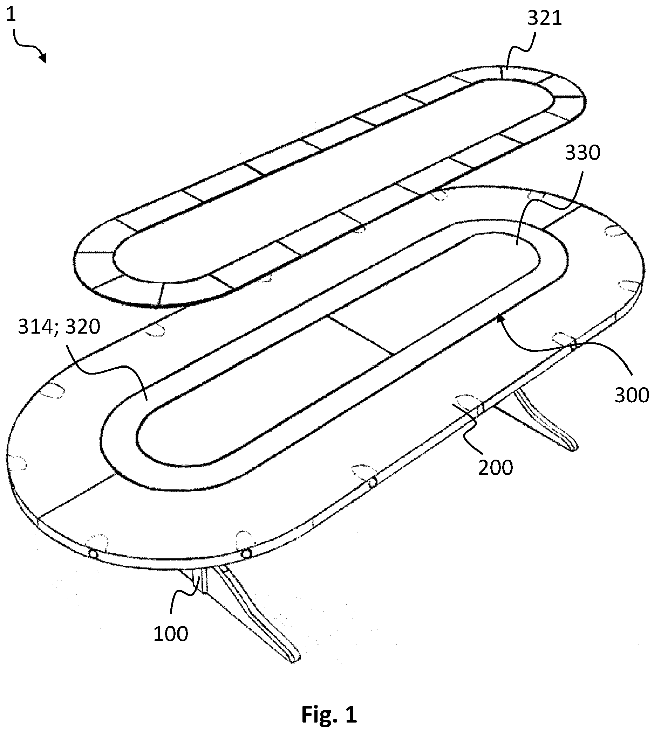

In den Figuren 1 bis 6 ist eine besonders bevorzugte Ausführungsform eines erfindungsgemäßen Esstischs 1 gezeigt.

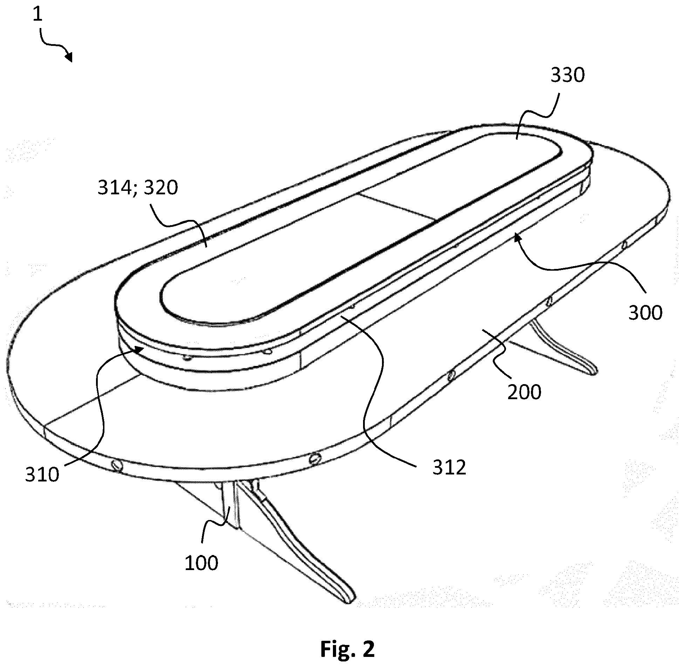

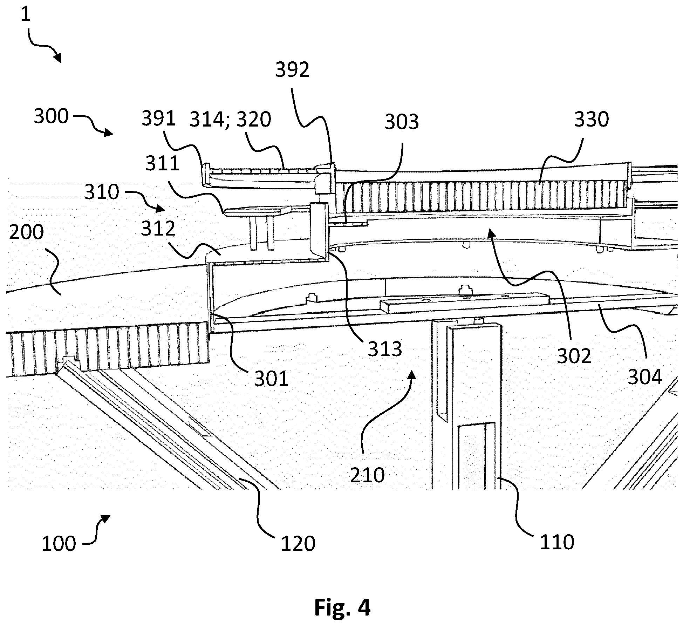

Figuren 1 und 2 zeigen in perspektivischer Ansicht den erfindungsgemäßen Esstischs 1 mit einem Stützgestell 100, einer Tischplatte 200 und einem ausfahrbaren Abschnitt 300. Die Tischplatte 200 ist auf dem Stützgestell 100 gelagert und weist eine Ausnehmung 210 (siehe Figur 4) auf, in welcher der ausfahrbare Abschnitt 300 aufgenommen ist.

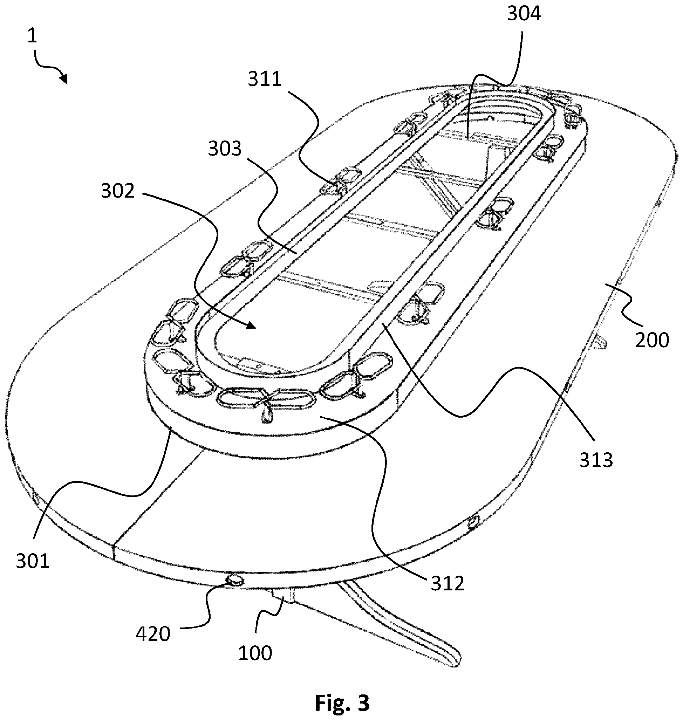

Der ausfahrbare Abschnitt 300 weist eine Ablagefläche 330 auf, die in einer mittigen Ausnehmung 302 und/oder auf einer Auflagefläche 303 des ausfahrbaren Abschnitts 330 aufgenommen wird (siehe auch Figur 3). Die Ablagefläche 330 kann auf dem ausfahrbaren Abschnitt 300 aufgelegt und/oder davon abgenommen werden. Die Ablagefläche 330 ist bevorzugt aus einem Material mit einer geringeren Wärmeleitfähigkeit als eine taschenförmige Öffnung 310 ausgebildet, die unten näher beschrieben wird. Im dargestellten Beispiel ist die Ablagefläche 330 aus mehreren Segmenten ausgebildet.

Wie in den Figuren 1 und 2 gut zu sehen ist, ist der ausfahrbare Abschnitt 300 so ausgelegt, dass der ausfahrbare Abschnitt in Höhenrichtung des Esstischs 1 zwischen einer abgesenkten Stellung, in der die taschenförmige Öffnung 310 in der Ausnehmung 210 versenkt ist, und einer erhöhten Stellung, in der die taschenförmige Öffnung 310 aus der Tischplatte ragt, verfahrbar ist. In der abgesenkten Stellung (vgl. Figur 1) ragt der ausfahrbare Abschnitt 300 bevorzugt nicht über die Tischplatte 200 hinaus. Dies dient dem alltäglichen Gebrauch des Esstischs 1. In diesem Zustand kann eine Abdeckung 321 bündig mit der Tischplatte 200 auf dem ausfahrbaren Abschnitt 300 (z.B. auf einer Decke 314 bzw. auf einer Heizplatte 320 des ausfahrbaren Abschnitts 300) aufgelegt werden. Die Ablagefläche 330 ist in dieser Stellung im Wesentlichen bündig mit der Tischplatte 200 angeordnet.

In der erhöhten Stellung (vgl. Figur 2) wird eine taschenförmige Öffnung 310 umlaufend um den ausfahrbaren Abschnitt 300 für den Nutzer zugänglich.

Die taschenförmige Öffnung 310 weist mindestens ein und vorzugsweise, wie in den Figuren dargestellt, mehrere Heizelemente 311 zum Erhitzen einer Essensportion auf (siehe Figur 3). Die taschenförmige Öffnung 310 weist einen Boden 312 zum Abstellen von mindestens einem Behälter mit der Essensportion auf, der in der erhöhten Stellung bevorzugt etwas über der Tischplatte 200 angeordnet ist. Dies verhindert ein versehentliches Aufliegen der Behälter auf der Tischplatte 200.

Für eine erleichterte Visualisierung wird in der Figur 3 eine perspektivische Ansicht des Esstischs 1 gemäß Figur 2 bei Entfernung der Decke 314 der taschenförmigen Öffnung 310 und der Ablagefläche 330 des Esstischs 1 dargestellt. Die taschenförmige Öffnung 310 weist eine innere Seitenwand 313 zwischen der Decke 314 (nicht dargestellt) und dem Boden 312 sowie eine untere Seitenwand 301, die sich von der taschenförmigen Öffnung 310 nach unten erstreckt, auf.

Die taschenförmige Öffnung 310 ist bevorzugt aus Stahl, besonders bevorzugt aus Edelstahl, ausgebildet.

Entlang der taschenförmigen Öffnung 310 sind um den ausfahrbaren Abschnitt 300 herum mehrere Heizelemente 311, wie z.B. die jeweils einem Nutzer zugeordnete Heizschleifen, angeordnet (siehe Figur 3). Die Heizelemente 311 sind entlang eines geraden Abschnitts der taschenförmigen Öffnung 310 vorzugsweise in einem Mindestabstand voneinander von 20 cm, vorzugsweise 40 cm, angeordnet und entlang eines Kurvenabschnitts oder Eckenabschnitts der taschenförmigen Öffnung 310 enger als entlang des geraden Abschnitts angeordnet.

Die Heizelemente 311 sind vom Boden 312 beabstandet, vorzugsweise um mindestens 5cm, um die Essensportionen der Behälter von oben zu erwärmen.

Die Heizelemente 311 sind unterhalb und/oder entlang der als Heizplatte dienenden Decke 314 angeordnet, sodass Wärme der Heizelemente 311 auch für die Zubereitung zusätzlicher Behälter mit einer Essensportion auf der Heizplatte 320 (in Figur 3 nicht dargestellt) benutzt werden kann.

Die Einstellung der Heizleistung oder der Temperatur der Heizelemente 311 kann durch einen jeweiligen Regler 420 eingestellt werden. Da die Temperatur in dem Kurvenabschnitt und dem Eckenabschnitt im Vergleich zu dem geraden Abschnitt aufgrund des engen Abstands zwischen den Heizelementen 311 höher ist, kann durch ein automatisches intermittierendes Ein- und Ausschalten der Heizelemente nach vorbestimmter Einschalt- und Pausenzeit die Zubereitung bestimmter Essensportionen optional verlangsamt bzw. angepasst werden. Die Einschaltzeit beträgt vorzugsweise mindestens 1 Minute oder mindestens 2 Minuten. Die Pausenzeit beträgt vorzugsweise mindestens 10 Sekunden oder mindestens 20 Sekunden.

Figur 4 stellt eine Querschnittsansicht des Esstischs 1 gemäß Figur 2 dar. Der ausfahrbare Abschnitt 300 ist über mehrere Querbalken 304 abgestützt.

Figur 4 veranschaulicht auch die Aufnahme der Heizplatte 320 und der Ablagefläche 330 in der mittigen Ausnehmung 302 und/oder auf der Auflagefläche 303 des ausfahrbaren Abschnitts 330. Die innere Seitenwand 313 ist umlaufend um die Ablagefläche 330 und den inneren Abschnitt der Heizplatte 320 ausgebildet. Die Heizplatte 320 ist nach oben abnehmbar und somit wird bei einem Herunterfahren des ausfahrbaren Abschnitts 300 die Quetschgefahr durch die taschenförmige Öffnung 310 reduziert.

Die Heizplatte 320 weist einen erhöhten inneren Rand 391 benachbart zur Ablagefläche 330 und einen erhöhten äußeren Rand 392 benachbart zur Tischplatte 200 auf. Dies kann ein Überlaufen von Flüssigkeiten verhindern.

Die Tischplatte 200, der ausfahrbare Abschnitt 300, die taschenförmige Öffnung 310, die Ablagefläche 330 und die Heizplatte 320 weisen optional eine ovale Form auf, wobei die Nutzung des Esstischs die für ca. 10 bis 14 Personen ausgelegt ist.

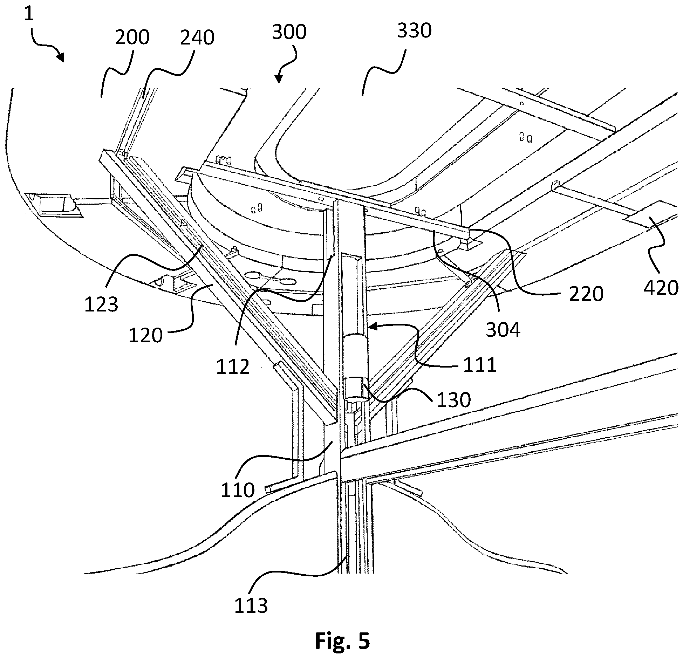

In Figur 5, die eine perspektivische Ansicht des Esstischs 1 gemäß Figur 2 von unten darstellt, wird der Verfahrensmechanismus des ausfahrbaren Abschnitts 300 in Höhenrichtung detaillierter gezeigt.

Das Stützgestell 100 weist mindestens zwei ausfahrbare Säulen 110 und mindestens zwei Stützsäulen 120 auf, die miteinander verbunden sind. Das obere Ende der ausfahrbaren Säulen 110 ist für die Aufnahme des ausfahrbaren Abschnitts 300 ausgebildet und das obere Ende der Stützsäulen 120 ist für die Aufnahme der Tischplatte 200 ausgebildet.

In den ausfahrbaren Säulen 110 gibt es jeweils einen Abschnitt 111 für die Aufnahme eines Bewegungselements 130, was vorzugsweise ein elektrischer Hubzylinder ist. Das Bewegungselement 130 wird für das Verfahren des ausfahrbaren Abschnitts 300 in Höhenrichtung des Esstischs 1 eingesetzt.

In den ausfahrbaren Säulen 110 gibt es jeweils einen Endanschlagsabschnitt 112 für die Aufnahme des Querbalkens 304 des ausfahrbaren Abschnitts 300 in der abgesenkten Stellung.

In der Tischplatte gibt es einen oder mehrere Endanschlagsabschnitte 220 für die Aufnahme des Querbalkens 304 in der erhöhten Stellung. Zudem weisen die Tischplatte 200 (an der unteren Seite), die ausfahrbaren Säulen 110 und die Stützsäulen 120 mehrere Aussparungen 113, 123 bzw. 240 als Kabelführungen für die Stromversorgung oder Regelung auf. Die Tischplatte 200 kann mehrere Aussparungen für den Einbau der Regler 420 am jeweiligen Sitzplatz aufweisen.

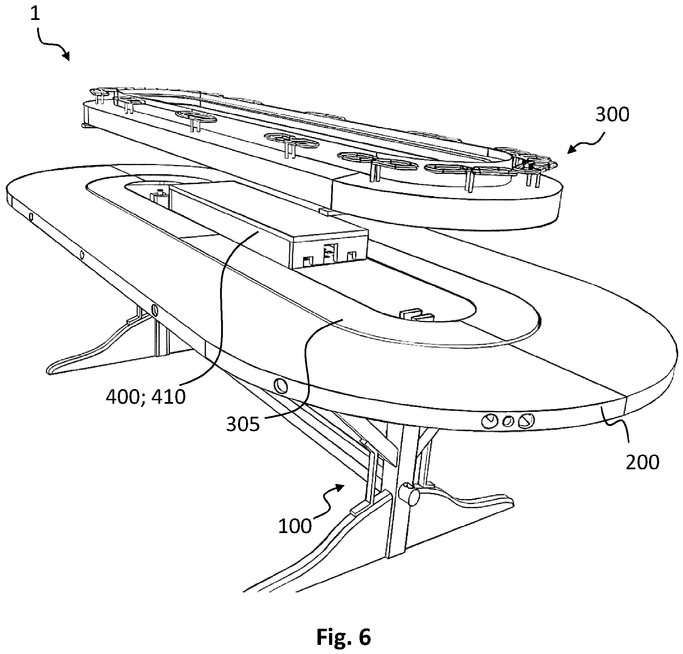

Figur 6 stellt eine Explosionsdarstellung des Esstischs 1 gemäß Figur 1 dar. Hier wird ein Steuergerät 400 für die Reglung der Heizelemente 311 und/oder für die Steuerung der Bewegung des ausfahrbaren Abschnitts 300 angeordnet in einem Brandschutzgehäuse 410 dargestellt. Das Steuergerät 400 ist unterhalb der Ablagefläche 330 im ausfahrbaren Abschnitt 300 und auf einem oder mehreren Querbalken 304 des ausfahrbaren Abschnitts 300 angeordnet. Der ausfahrbare Abschnitt 300 ist durch eine Abdeckung 305 von unten abgedeckt.

Im Betrieb werden die Heizelemente 311 durch ein oder mehrere Kabel von einer Stromquelle, vorzugsweise mit einer Spannung in einem Bereich von 100 bis 240 Volt oder mindestens 400 Volt, versorgt und durch ein oder mehrere Kabel von dem Regler 420 und/oder dem Steuergerät 400 gesteuert. Vorzugsweise sind die Regler 420 jeweils mit dem Steuergerät 400 verbunden.

Das Steuergerät 400 ist aus Sicherheitsgründen vorzugsweise so ausgebildet, dass das eine oder die mehreren Heizelemente 311 nur in der erhöhten Stellung eingeschaltet und/oder ausgeschaltet werden können. Auch wird vorzugsweise ein Verfahren des ausfahrbaren Abschnitts 300 von der erhöhten Stellung in die abgesenkte Stellung verhindert, wenn das eine oder die mehreren Heizelemente 311 angeschaltet sind und/oder bevor das eine oder die mehreren Heizelemente 311 für eine vorbestimmte Mindestabkühlzeit ausgeschaltet sind. Eine Ausnahme kann bestehen, wenn die Heizelemente 311 vor dem Ausschalten nur kurzzeitig eingeschaltet waren, bevorzugt weniger als 30 Sekunden. Alternativ oder zusätzlich kann der Esstisch 1 einen oder mehrere Temperatursensoren (nicht dargestellt) aufweisen, wobei das Steuergerät 400 des Esstischs 1 so ausgebildet ist, dass es ein Verfahren des ausfahrbaren Abschnitts 300 von der erhöhten Stellung in die abgesenkte Stellung verhindert, bevor der eine oder die mehrere Temperatursensoren bestimmen, dass die Temperatur der Heizplatte 320, der taschenförmigen Öffnung 310 und/oder des einen oder der mehreren Heizelemente 311 unter einer vorbestimmten Maximaltemperatur liegt.

Das eine oder die mehreren Heizelemente 311 können nach einem Einschalten und einer vorbestimmten Essenszeit, bevorzugt von mehr als 4 Stunden, automatisch durch ein Steuergerät 400 ausgeschaltet werden.

Die Erfindung bezieht sich insbesondere auf folgende Aspekte:
1. Esstisch (1), mit:
   einem Stützgestell (100);
   einer Tischplatte (200), die auf dem Stützgestell (100) gelagert ist, wobei die Tischplatte (200) eine Ausnehmung (210) aufweist; und
   einem ausfahrbaren Abschnitt (300), wobei der ausfahrbare Abschnitt (300) in der Ausnehmung (210) der Tischplatte (200) aufgenommen ist und eine taschenförmige Öffnung (310) mit einem oder mehreren Heizelementen (311) zum Erhitzen einer Essensportion aufweist;
   wobei der ausfahrbare Abschnitt (300) in Höhenrichtung des Esstischs (1) zwischen einer abgesenkten Stellung, in der die taschenförmige Öffnung (310) in der Ausnehmung (210) versenkt ist, und einer erhöhten Stellung, in der die taschenförmige Öffnung (310) aus der Tischplatte ragt, verfahrbar ist.
2. Esstisch (1) nach dem vorhergehenden Aspekt, wobei die taschenförmige Öffnung (310) einen Boden (312) zum Abstellen von mindestens einem Behälter mit der Essensportion, bevorzugt zum Abstellen von einer Mehrzahl von Behältern mit einer jeweiligen Essensportion, aufweist.
3. Esstisch (1) nach dem vorhergehenden Aspekt, wobei der Boden (312) der taschenförmigen Öffnung (310) in der erhöhten Stellung auf gleicher Höhe mit oder über der Tischplatte (200) angeordnet ist, vorzugsweise mindestens 0,5 cm oder mindestens 1 cm über der Tischplatte (200).
4. Esstisch (1) nach einem der vorhergehenden Aspekte, wobei der ausfahrbare Abschnitt (300) in der abgesenkten Stellung weniger als 5 cm über die Tischplatte (200) hinausragt, vorzugsweise weniger als 2 cm und stärker bevorzugt nicht über die Tischplatte (200) hinausragt.
5. Esstisch (1) nach einem der vorhergehenden Aspekte, wobei die taschenförmige Öffnung (310) eine innere Seitenwand (313) und/oder eine Decke (314) aufweist.
6. Esstisch (1) nach einem der vorhergehenden Aspekte, wobei die taschenförmige Öffnung (310) zur Seite und/oder in Richtung der Tischplatte (200) geöffnet ist.
7. Esstisch (1) nach einem der vorhergehenden Aspekte, wobei die taschenförmige Öffnung (310) umlaufend um den ausfahrbaren Abschnitt (300) ausgebildet ist.
8. Esstisch (1) nach einem der vorhergehenden Aspekte, wobei der ausfahrbare Abschnitt (300) ferner eine untere Seitenwand (301) aufweist, die sich von der taschenförmigen Öffnung (310) nach unten erstreckt.
9. Esstisch (1) nach einem der vorhergehenden Aspekte, wobei die taschenförmige Öffnung (310) und/oder der ausfahrbare Abschnitt (300) aus Metall ausgebildet ist, bevorzugt aus Stahl, besonders bevorzugt aus Edelstahl.
10. Esstisch (1) nach einem der vorhergehenden Aspekte, wobei das eine oder die mehreren Heizelemente (311) Heizschleifen sind.
11. Esstisch (1) nach einem der vorhergehenden Aspekte, wobei das eine Heizelement entlang der taschenförmigen Öffnung (310) um den ausfahrbaren Abschnitt (300) herum verläuft oder wobei die mehreren Heizelemente (311) entlang der taschenförmigen Öffnung (310) um den ausfahrbaren Abschnitt (300) herum angeordnet sind.
12. Esstisch (1) nach einem der vorhergehenden Aspekte, ferner mit einem Regler (420) und/oder einem Steuergerät (400) zur Einstellung der Heizleistung und/oder der Temperatur des einen oder der mehreren Heizelemente (311).
13. Esstisch (1) nach einem der vorhergehenden Aspekte, wobei die Heizleistung und/oder die Temperatur der mehreren Heizelemente (311) einzeln oder in Untergruppen einstellbar ist, vorzugsweise durch einen jeweiligen Nutzer.
14. Esstisch (1) nach dem vorhergehenden Aspekt, wobei der Esstisch (1) mehrere Regler (420) aufweist, die einem Nutzer jeweils die Einstellung der Temperatur und/oder der Heizleistung für ein einzelnes Heizelement (311) oder für eine Untergruppe der Heizelemente (311) gestatten.
15. Esstisch (1) nach einem der vorhergehenden Aspekte, wobei die Heizelemente (311) entlang eines geraden Abschnitts der taschenförmigen Öffnung (310) in einem Mindestabstand voneinander von 20 cm, vorzugsweise 40 cm, angeordnet sind.
16. Esstisch (1) nach dem vorhergehenden Aspekt, wobei die Heizelemente (311) entlang eines Kurvenabschnitts oder Eckenabschnitts der taschenförmigen Öffnung (310) enger als entlang des geraden Abschnitts angeordnet sind.
17. Esstisch (1) nach einem der vorhergehenden Aspekte, wobei der Esstisch (1) mindestens acht, bevorzugt mindestens zehn, besonders bevorzugt mindestens zwölf Heizelemente (311), aufweist.
18. Esstisch (1) nach einem der Aspekte 2 bis 17, wobei das eine oder die mehreren Heizelemente (311) vom Boden (312) beabstandet sind, wobei der Abstand vorzugsweise mindestens 3 cm, stärker bevorzugt mindestens 5 cm beträgt.
19. Esstisch (1) nach einem der Aspekte 2 bis 18, wobei das eine oder die mehreren Heizelemente (311) so ausgebildet sind, dass sie die Essensportion von oben erwärmen.
20. Esstisch (1) nach einem der Aspekte 2 bis 19, wobei das eine oder die mehreren Heizelemente (311) so ausgebildet sind, dass der eine oder die mehreren auf dem Boden (312) abgestellten Behälter unter den Heizelementen anordenbar sind.
21. Esstisch (1) nach einem der Aspekte 5 bis 20, wobei das eine oder die mehreren Heizelemente (311) unterhalb und/oder entlang der Decke (314) angeordnet sind.
22. Esstisch (1) nach einem der vorhergehenden Aspekte, wobei der ausfahrbare Abschnitt (300) eine Ablagefläche (330) aufweist.
23. Esstisch (1) nach dem vorhergehenden Aspekt,
   wobei die Ablagefläche (330) über dem Boden (312) angeordnet ist; und/oder wobei die Ablagefläche (330) benachbart zu einer oberen Fläche der Decke (314) und/oder im Wesentlichen auf gleicher Höhe wie die obere Fläche der Decke (314) angeordnet ist.
24. Esstisch (1) nach einem der zwei vorhergehenden Aspekte, wobei die Ablagefläche (330) auf dem ausfahrbaren Abschnitt (300) aufliegt und/oder abnehmbar ist.
25. Esstisch (1) nach einem der drei vorhergehenden Aspekte, wobei der ausfahrbare Abschnitt (300) eine mittige Ausnehmung (302) und/oder eine Auflagefläche (303) zur Aufnahme der Ablagefläche (330) aufweist.
26. Esstisch (1) nach einem der vier vorhergehenden Aspekte,
   wobei die Ablagefläche (330) aus einem Material mit einer geringeren Wärmeleitfähigkeit als die taschenförmige Öffnung (310) ausgebildet ist; und/oder wobei die Ablagefläche (330) aus Marmor und/oder Stein ausgebildet ist.
27. Esstisch (1) nach einem der fünf vorhergehenden Aspekte, wobei die Ablagefläche (330) einstückig oder aus mehreren Segmenten ausgebildet ist.
28. Esstisch (1) nach einem der sechs vorhergehenden Aspekte, wobei die taschenförmige Öffnung (310) die Ablagefläche (330) zumindest abschnittsweise oder vollständig umgibt.
29. Esstisch (1) nach einem der vorhergehenden Aspekte, wobei der ausfahrbare Abschnitt (300) ferner eine Heizplatte (320) aufweist.
30. Esstisch (1) nach dem vorhergehenden Aspekt, wobei die Heizplatte (320) über dem Boden (312) der taschenförmigen Öffnung (310) angeordnet ist und/oder wobei die Heizplatte (320) die Decke (314) der taschenförmigen Öffnung (310) bildet.
31. Esstisch (1) nach einem der zwei vorhergehenden Aspekte, wobei die Heizplatte (320) auf dem ausfahrbaren Abschnitt (300) aufliegt und/oder abnehmbar ist.
32. Esstisch (1) nach einem der drei vorhergehenden Aspekte, wobei der ausfahrbare Abschnitt (300) eine mittige Ausnehmung (302) und/oder eine Auflagefläche (303) für die Aufnahme der Heizplatte (320) aufweist.
33. Esstisch (1) nach einem der vier vorhergehenden Aspekte, wobei die innere Seitenwand (313) der taschenförmigen Öffnung (310) zur Aufnahme der Heizplatte (320) ausgebildet ist, wobei die innere Seitenwand (313) die Heizplatte (320) vorzugsweise zumindest abschnittsweise oder vollständig umgibt.
34. Esstisch (1) nach einem der fünf vorhergehenden Aspekte, wobei die Heizplatte (320) aus einem Material mit einer höheren Wärmeleitfähigkeit als die Auflagefläche (330) und/oder aus Stahl ausgebildet ist.
35. Esstisch (1) nach einem der sechs vorhergehenden Aspekte, wobei die Heizplatte (320) einstückig oder aus mehreren Segmenten ausgebildet ist.
36. Esstisch (1) nach einem der sieben vorhergehenden Aspekte, wobei die Heizplatte (320) eine Heizfläche zum Abstellen von mindestens einem Behälter mit einer Essensportion, bevorzugt zum Abstellen von einer Mehrzahl von Behältern mit einer jeweiligen Essensportion, ausbildet, wobei die Heizfläche im Wesentlichen bündig mit oder unterhalb der Ablagefläche (330) angeordnet ist.
37. Esstisch (1) nach dem vorhergehenden Aspekt, wobei die Heizfläche mindestens 0,3 cm, vorzugsweise mindestens 0,5 cm oder mindestens 1 cm unter der Ablagefläche (330) angeordnet ist.
38. Esstisch (1) nach einem der beiden vorhergehenden Aspekte, wobei die Heizfläche von einem radial inneren erhöhten Rand und/oder einem radial äußeren erhöhten Rand umgeben ist, vorzugsweise wobei der innere und/oder der äußere erhöhte Rand durch die Heizplatte (320) gebildet ist.
39. Esstisch (1) nach einem der zehn vorhergehenden Aspekte, ferner mit einer Abdeckung (321) für die Heizplatte (320), vorzugsweise wobei eine obere Fläche der Abdeckung (321) im Wesentlichen mit der Ablagefläche (330) bündig ist.
40. Esstisch (1) nach einem der vorhergehenden Aspekte, wobei die Heizelemente (311) im Betrieb durch ein oder mehrere Kabel von einer Stromquelle, vorzugsweise mit einer Spannung in einem Bereich von 100 bis 240 Volt oder mindestens 400 V, versorgt werden, und/oder wobei die Heizelemente (311) im Betrieb durch ein oder mehrere Kabel von einem Regler (420) und/oder einem Steuergerät (400) gesteuert werden.
41. Esstisch (1) nach einem der vorhergehenden Aspekte, wobei ein Steuergerät (400) des Esstischs (1) so ausgebildet ist, dass
   das eine oder die mehreren Heizelemente (311) in der abgesenkten Stellung nicht eingeschaltet werden können; und/oder
   das eine oder die mehreren Heizelemente (311) nur in der erhöhten Stellung eingeschaltet und ausgeschaltet werden können.
42. Esstisch (1) nach einem der vorhergehenden Aspekte, wobei ein Steuergerät (400) des Esstischs (1) so ausgebildet ist, dass es ein Verfahren des ausfahrbaren Abschnitts (300) von der erhöhten Stellung in die abgesenkte Stellung verhindert, wenn das eine oder die mehreren Heizelemente (311) angeschaltet sind.
43. Esstisch (1) nach einem der vorhergehenden Aspekte, wobei ein Steuergerät (400) des Esstischs (1) so ausgebildet ist, dass es ein Verfahren des ausfahrbaren Abschnitts (300) von der erhöhten Stellung in die abgesenkte Stellung verhindert, bevor:
   das eine oder die mehreren Heizelemente (311) für eine vorbestimmte Mindestabkühlzeit ausgeschaltet sind, wobei die Mindestabkühlzeit vorzugsweise von einer Dauer eines vorangegangen Betriebs der Heizelemente (311) abhängt.
44. Esstisch (1) nach dem vorhergehenden Aspekt, wobei das Steuergerät (400) das Verfahren von der erhöhten Stellung in die abgesenkte Stellung nicht verhindert, wenn die Heizelemente (311) vor dem Ausschalten nur kurzzeitig eingeschaltet waren, bevorzugt weniger als 30 Sekunden.
45. Esstisch (1) nach einem der vorhergehenden Aspekte, wobei der Esstisch (1) einen oder mehrere Temperatursensoren aufweist, wobei ein Steuergerät (400) des Esstischs (1) so ausgebildet ist, dass es ein Verfahren des ausfahrbaren Abschnitts (300) von der erhöhten Stellung in die abgesenkte Stellung verhindert, bevor:
   der eine oder die mehrere Temperatursensoren bestimmen, dass die Temperatur der Heizplatte (320), der taschenförmigen Öffnung (310) und/oder des einen oder der mehreren Heizelemente (311) unter einer vorbestimmten Maximaltemperatur liegt.
46. Esstisch (1) nach einem der vorhergehenden Aspekte, wobei das eine oder die mehreren Heizelemente (311) in der erhöhten Stellung nach einem Einschalten und einer vorbestimmten Essenszeit, bevorzugt von mehr als 4 Stunden, automatisch durch ein Steuergerät (400) ausgeschaltet werden.
47. Esstisch (1) nach einem der vorhergehenden Aspekte, wobei Heizelemente (311) entlang eines Kurvenabschnitts oder eines Eckenabschnitts der taschenförmigen Öffnung (310) intermittierend ein- und ausgeschaltet werden, vorzugsweise wobei diese Heizelemente (311) wiederholt automatisch nach Überschreiten einer vorbestimmten Einschaltzeit für eine vorbestimmte Pausenzeit ausgeschaltet und dann wieder eingeschaltet werden.
48. Esstisch (1) nach dem vorhergehenden Aspekt, wobei die Einschaltzeit mindestens 1 Minute, vorzugsweise mindestens 2 Minuten beträgt.
49. Esstisch (1) nach einem der beiden vorhergehenden Aspekte, wobei die Pausenzeit mindestens 10 Sekunden, vorzugsweise mindestens 20 Sekunden beträgt.
50. Esstisch (1) nach einem der vorhergehenden Aspekte, wobei der Esstisch (1) ein Steuergerät (400) für die Steuerung der Heizelemente (311) und/oder für die Steuerung von einem oder mehreren Bewegungselementen (130) aufweist.
51. Esstisch (1) nach dem vorhergehenden Aspekt, wobei das Steuergerät (400) in einem Brandschutzgehäuse (410) angeordnet ist, wobei das Gehäuse (410) vorzugsweise aus Gipsfaser ausgebildet ist.
52. Esstisch (1) nach einem der beiden vorhergehenden Aspekte, wobei das Steuergerät (400) unterhalb der Ablagefläche (330) im ausfahrbaren Abschnitt (300) angeordnet ist, vorzugsweise auf einem oder mehreren Querbalken (304) des ausfahrbaren Abschnitts (300).
53. Esstisch (1) nach einem der vorhergehenden Aspekte, wobei der ausfahrbare Abschnitt (300) von unten durch eine Abdeckung (305), bevorzugt aus Aluminium, abgedeckt wird.
54. Esstisch (1) nach einem der vorhergehenden Aspekte, wobei das Stützgestell (100) mindestens zwei ausfahrbare Säulen (110) aufweist, wobei das obere Ende der Säulen (110) für die Aufnahme des ausfahrbaren Abschnitts (300) ausgebildet ist.
55. Esstisch (1) nach dem vorhergehenden Aspekt, wobei das Stützgestell (100) weiterhin mindestens zwei Stützsäulen (120) aufweist, wobei das obere Ende der Stützsäulen (120) für die Aufnahme der Tischplatte (200) ausgebildet ist.
56. Esstisch (1) nach dem vorhergehenden Aspekt, wobei die Stützsäulen (120) mit den ausfahrbaren Säulen (110) verbunden sind.
57. Esstisch (1) nach einem der drei vorhergehenden Aspekte, wobei die ausfahrbaren Säulen (110) jeweils ein Bewegungselement (130) aufweisen, vorzugsweise einen elektrischen Hubzylinder.
58. Esstisch (1) nach dem vorhergehenden Aspekt, wobei die ausfahrbaren Säulen (110) jeweils einen Abschnitt (111) für die Aufnahme des Bewegungselements (130) aufweisen.
59. Esstisch (1) nach einem der fünf vorhergehenden Aspekte, wobei die ausfahrbaren Säulen (110) einen Endanschlagsabschnitt (112) für die Aufnahme des ausfahrbaren Abschnitts (300) in der abgesenkten Stellung aufweisen, bevorzugt eines Querbalkens (304) des ausfahrbaren Abschnitts (300).
60. Esstisch (1) nach einem der sechs vorhergehenden Aspekte, wobei die ausfahrbaren Säulen (110) und/oder die Stützsäulen (120) eine oder mehrere Aussparungen (113; 123) für die Kabelführungen aufweisen.
61. Esstisch (1) nach einem der vorhergehenden Aspekte, wobei die Tischplatte (200) eine der folgenden Formen aufweist: oval, kreisförmig, rechteckig, hexagonal, oktogonal.
62. Esstisch (1) nach einem der vorhergehenden Aspekte, wobei der ausfahrbare Abschnitt (300), die taschenförmige Öffnung (310), die Ablagefläche (330) und die Heizplatte (320) eine der folgenden Formen aufweist: oval, kreisförmig, rechteckig, hexagonal, oktogonal.
63. Esstisch (1) nach einem der vorhergehenden Aspekte, wobei die Tischplatte (200) einen Endanschlagsabschnitt (220) für die Aufnahme des ausfahrbaren Abschnitts (300) in der erhöhten Stellung aufweist, bevorzugt eines Querbalkens (304) des ausfahrbaren Abschnitts (300).
64. Esstisch (1) nach dem vorhergehenden Aspekt, wobei der ausfahrbare Abschnitt (300) in der erhöhten Stellung von unten an den Endanschlagsabschnitt (220) der Tischplatte (200) anschlägt.
65. Esstisch (1) nach einem der vorhergehenden Aspekte, wobei die Tischplatte (200) eine oder mehrere Aussparungen (240) für die Kabelführung aufweisen, bevorzugt an der unteren Seite der Tischplatte (200).
66. Esstisch (1) nach einem der vorhergehenden Aspekte, wobei der Esstisch (1) ferner einen Dunstabzug und/oder eine Sitzbank aufweist.

## Patentansprüche

1. Esstisch (1), mit:
einem Stützgestell (100);
einer Tischplatte (200), die auf dem Stützgestell (100) gelagert ist, wobei die Tischplatte (200) eine Ausnehmung (210) aufweist; und
einem ausfahrbaren Abschnitt (300), wobei der ausfahrbare Abschnitt (300) in der Ausnehmung (210) der Tischplatte (200) aufgenommen ist und eine taschenförmige Öffnung (310) mit einem oder mehreren Heizelementen (311) zum Erhitzen einer Essensportion aufweist;
wobei der ausfahrbare Abschnitt (300) in Höhenrichtung des Esstischs (1) zwischen einer abgesenkten Stellung, in der die taschenförmige Öffnung (310) in der Ausnehmung (210) versenkt ist, und einer erhöhten Stellung, in der die taschenförmige Öffnung (310) aus der Tischplatte ragt, verfahrbar ist.

2. Esstisch (1) nach dem vorhergehenden Anspruch,
wobei die taschenförmige Öffnung (310) einen Boden (312) zum Abstellen von mindestens einem Behälter mit der Essensportion, bevorzugt zum Abstellen von einer Mehrzahl von Behältern mit einer jeweiligen Essensportion, aufweist, und wobei die taschenförmige Öffnung (310) bevorzugt eine innere Seitenwand (313) und/oder eine Decke (314) aufweist.

3. Esstisch (1) nach einem der vorangehenden Ansprüche,
wobei die taschenförmige Öffnung (310) zur Seite und/oder in Richtung der Tischplatte (200) geöffnet ist, und/oder wobei die taschenförmige Öffnung (310) umlaufend um den ausfahrbaren Abschnitt (300) ausgebildet ist.

4. Esstisch (1) nach einem der vorangehenden Ansprüche,
wobei das eine Heizelement entlang der taschenförmigen Öffnung (310) um den ausfahrbaren Abschnitt (300) herum verläuft oder wobei die mehreren Heizelemente (311) entlang der taschenförmigen Öffnung (310) um den ausfahrbaren Abschnitt (300) herum angeordnet sind.

5. Esstisch (1) nach einem der vorangehenden Ansprüche,
ferner mit einem Regler (420) und/oder einem Steuergerät (400) zur Einstellung der Heizleistung und/oder der Temperatur mehrerer Heizelemente (311), wobei die Heizleistung und/oder die Temperatur der mehreren Heizelemente (311) einzeln oder in Untergruppen einstellbar ist.

6. Esstisch (1) nach einem der vorangehenden Ansprüche,
wobei die Heizelemente (311) entlang eines geraden Abschnitts der taschenförmigen Öffnung (310) in einem Mindestabstand voneinander von 20 cm, vorzugsweise 40 cm, angeordnet sind.

7. Esstisch (1) nach einem der vorangehenden Ansprüche,
wobei das eine oder die mehreren Heizelemente (311) vom Boden (312) beabstandet sind, wobei der Abstand vorzugsweise mindestens 3 cm, stärker bevorzugt mindestens 5 cm beträgt.

8. Esstisch (1) nach einem der vorangehenden Ansprüche,
wobei der ausfahrbare Abschnitt (300) ferner eine Heizplatte (320) aufweist, wobei die Heizplatte (320) die Decke (314) der taschenförmigen Öffnung (310) bildet, wobei die Heizplatte (320) bevorzugt auf dem ausfahrbaren Abschnitt (300) aufliegt und/oder abnehmbar ist.

9. Esstisch (1) nach einem der vorangehenden Ansprüche,
wobei ein Steuergerät (400) des Esstischs (1) so ausgebildet ist, dass das eine oder die mehreren Heizelemente (311) in der abgesenkten Stellung nicht eingeschaltet werden können und/oder das eine oder die mehreren Heizelemente (311) nur in der erhöhten Stellung eingeschaltet werden können.

10. Esstisch (1) nach einem der vorangehenden Ansprüche,
wobei ein Steuergerät (400) des Esstischs (1) so ausgebildet ist, dass es ein Verfahren des ausfahrbaren Abschnitts (300) von der erhöhten Stellung in die abgesenkte Stellung verhindert, wenn das eine oder die mehreren Heizelemente (311) angeschaltet sind; und/oder
wobei ein Steuergerät (400) des Esstischs (1) so ausgebildet ist, dass es ein Verfahren des ausfahrbaren Abschnitts (300) von der erhöhten Stellung in die abgesenkte Stellung verhindert, bevor das eine oder die mehreren Heizelemente (311) für eine vorbestimmte Mindestabkühlzeit ausgeschaltet sind, wobei die Mindestabkühlzeit vorzugsweise von einer Dauer eines vorangegangen Betriebs der Heizelemente (311) abhängt.

11. Esstisch (1) nach einem der vorangehenden Ansprüche,
wobei das eine oder die mehreren Heizelemente (311) in der erhöhten Stellung nach einem Einschalten und einer vorbestimmten Essenszeit, bevorzugt von mehr als 4 Stunden, automatisch durch ein Steuergerät (400) ausgeschaltet werden.

12. Esstisch (1) nach einem der vorangehenden Ansprüche,
wobei Heizelemente (311) entlang eines Kurvenabschnitts oder eines Eckenabschnitts der taschenförmigen Öffnung (310) intermittierend ein- und ausgeschaltet werden, vorzugsweise wobei diese Heizelemente (311) wiederholt automatisch nach Überschreiten einer vorbestimmten Einschaltzeit für eine vorbestimmte Pausenzeit ausgeschaltet und dann wieder eingeschaltet werden, wobei die Einschaltzeit vorzugsweise mindestens 1 Minute, stärker bevorzugt mindestens 2 Minuten beträgt, und wobei die Pausenzeit vorzugsweise mindestens 10 Sekunden, stärker bevorzugt mindestens 20 Sekunden beträgt.

13. Esstisch (1) nach einem der vorangehenden Ansprüche,
wobei das Stützgestell (100) mindestens zwei ausfahrbare Säulen (110) aufweist, wobei das obere Ende der Säulen (110) für die Aufnahme des ausfahrbaren Abschnitts (300) ausgebildet ist und mindestens zwei Stützsäulen (120) aufweist, wobei das obere Ende der Stützsäulen (120) für die Aufnahme der Tischplatte (200) ausgebildet ist, und wobei die ausfahrbaren Säulen (110) jeweils ein Bewegungselement (130) aufweisen, vorzugsweise einen elektrischen Hubzylinder.

14. Esstisch (1) nach dem vorhergehenden Anspruch,
wobei die ausfahrbaren Säulen einen Endanschlagsabschnitt (112) für die Aufnahme des ausfahrbaren Abschnitts (300) in der abgesenkten Stellung aufweisen, bevorzugt eines Querbalkens (304) des ausfahrbaren Abschnitts (300), und/oder wobei die Tischplatte (200) einen Endanschlagsabschnitt (220) für die Aufnahme des ausfahrbaren Abschnitts (300) in der erhöhten Stellung aufweist, bevorzugt eines Querbalkens (304) des ausfahrbaren Abschnitts (300).

15. Esstisch (1) nach einem der vorangehenden Ansprüche,
wobei die Tischplatte (200) eine oder mehrere Aussparungen (240) für die Kabelführung aufweist, bevorzugt an der unteren Seite der Tischplatte (200).
